Europäisches Patentamt

European Patent Office

Office européen des brevets

(11) Veröffentlichungsnummer: **0 123 989**
**B1**

(12) **EUROPÄISCHE PATENTSCHRIFT**

(45) Veröffentlichungstag der Patentschrift:
**20.11.86**

(21) Anmeldenummer: **84104220.3**

(22) Anmeldetag: **13.04.84**

(51) Int. Cl.⁴: **F 16 N 7/36, F 01 D 25/18**

(54) **Zentrigufal-Schmierölpumpe eines Abgasturboladers.**

(30) Priorität: **29.04.83 CH 2310/83**

(43) Veröffentlichungstag der Anmeldung:
**07.11.84 Patentblatt 84/45**

(45) Bekanntmachung des Hinweises auf die Patenterteilung:
**20.11.86 Patentblatt 86/47**

(84) Benannte Vertragsstaaten:
**CH DE FR GB LI**

(56) Entgegenhaltungen:
**CH - A - 353 586**
**CH - A - 451 714**
**DE - B - 1 034 430**
**DE - C - 836 131**
**GB - A - 1 102 937**
**US - A - 3 690 410**

(73) Patentinhaber: **BBC Aktiengesellschaft Brown, Boveri & Cie., Haselstrasse, CH-5401 Baden (CH)**

(72) Erfinder: **Hörler, Hansulrich, Dr., Lerchenberg 5, CH-8046 Zürich (CH)**

## Beschreibung

Die Erfindung bezieht sich auf die Zentrifugal-Schmierölpumpe eines Abgasturboladers gemäss Obergebriff des Patentanspruchs 1.

Abgasturbolader sind oft mit Wälzlagern versehen, die infolge der hohen Drehzahlen durch grosse Mengen eingespritzen Öls geschmiert und gekühlt werden müssen, während sie beim Anfahren und kleinen Drehzahlen völlig ohne Öl auskommen. Die eingespritzte Ölmenge soll genau bestimmt werden und etwa proportional zur Drehzahl zunehmen. Das Einspritzen des Öls in den Wälzkörperkranz des Wellenlagers soll in der Nähe des Lagerinnenringes erfolgen. Das Schmieröl wird durch eine auf der Welle des Turboladers angeordnete Zentrifugalpumpe aus dem Ölsumpf abgesaugt und durch die Wellenlager gefördert. Ein Teil des Öls kann zwecks Kühlung direkt an die thermisch schwer beanspruchten Teile wie z.B. den Lagerinnenring gespritzt werden.

Zentrifugal-Schmierölpumpen der eingangs genannten Art sind beispielsweise aus der Patentschrift CH- 451 714 bekannt.

Bei dieser Lösung ist die Schmierölpumpe auf einem Ende der Turboladerwelle angebracht und deswegen nur bei aussengelagerten Turboladern verwendbar, da dieses System von einem relativ kleinen Innendurchmesser des rotierenden Ölringes in bezug auf die Lagerdurchmesser abhängig ist, welcher sich bei den innengelagerten Turboladern aus konstruktiven Gründen nicht erreichen lässt.

Die Schmierung der Wellenlager eines innengelagerten Abgasturboladers wird normalerweise mit dem Schmierkreislauf des Motors oder, für die relativ schmutzempfindlichen Wälzlager mit einer externen, beispielsweisen Zahnrad- oder Kolbenpumpe durchgeführt. Eine solche Pumpe verlangt einen separaten Antrieb und viel Platz, ausserdem ist sie nicht wartungsfrei und die Ausfallraten einzelner Komponenten sind nicht vernachlässigbar.

Der Erfindung liegt deshalb die Aufgabe zugrunde, eine hochwirksame zuverlässige Schmierölpumpe zu schaffen, die auch für innengelagerte Abgasturbolader verwendet werden kann.

Erfindungsgemäss wird diese Aufgabe mit den kennzeichnenden Merkmalen des Patentanspruchs 1 gelöst.

Die durch die Erfindung erreichten Vorteile sind im wesentlichen darin zu sehen, dass sich bei einer für innengelagerte Abgasturbolader vorgesehenen Zentrifugal-Schmierölpumpe ein ausreichender Einspritzdruck erreichen lässt, auch wenn keine konstruktive Möglichkeit besteht, den Öldruck, der sich in einem rotierenden Ölring infolge der Fliehkraftwirkung bildet, für die Einspritzung in die Wellenlager direkt zu benutzen.

Mit der Anordnung einer Zentrifugal-Schmierölpumpe unmittelbar auf der Welle eines innengelagerten Abgasturboladers sind die Faktoren eliminiert, die die Verfügbarkeit des Turboladers negativ beeinflussen können.

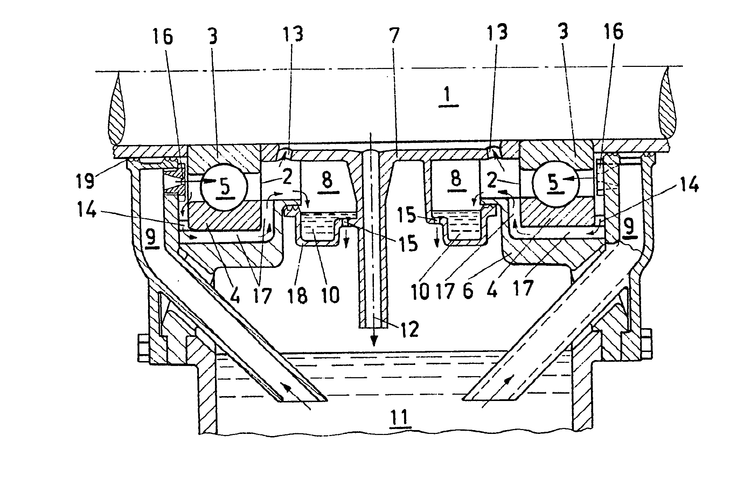

In der Zeichnung ist ein Ausführungsbeispiel des Erfindungsgegenstandes vereinfacht dargestellt.

Die einzige Figur zeigt eine Zentrifugal-Schmierölpumpe eines innengelagerten Abgasturboladers im Längsschnitt.

Die Strömungsrichtung des Schmieröls ist mit Pfeilen bezeichnet. Erfindungsunwesentliche Teile des Abgasturboladers wie beispielsweise Turbine, Verdichter usw. sind weggelassen.

Die Turboladerwelle 1 ist mittels Wellenlagern 2, bestehend aus einem Lagerinnenring 3, einem Lageraussenring 4 und Wälzkörper 5, in einem Gehäuse 6 gelagert. Auf der Turboladerwelle 1 ist ein mit radialangeordneten Entlüftungskanälen 12 versehener Pumpenrotor 7 befestigt. Eine Ölansaugleitung 9 taucht mit ihrem unteren Ende in einen Ölsumpf 11. Mit dem oberen Ende ist die Ölansaugleitung 9 mit einem Hohlraum 8 verbunden, in welchem sich unter der Saugwirkung der Entlüftungskanälen 12 ein Unterdruck einstellt.

Das aus dem Ölsumpf 11 durch die Lager 2 hindurch angesaugte Öl bildet während des Betriebes im Hohlraum 8 unter der Fliehkraftwirkung einen rotierenden Ölring 10 aus. Der Öldruck in diesem rotierenden Ölring 10 steigt mit zunehmendem Radius an.

Ein Druckaufbau in einem rotierenden Ölring, bereits ab kleinem Radius, wäre die Vorraussetzung für das Einspritzen des Öls aus dem rotierenden Ölring unmittelbar ins Lager mit kleinem Durchmesser, da das Einspritzen des Öls in den Wälzkörperkranz in der Nähe des Lagerinnenringes 3 erfolgen muss. Bei einer für einen innengelagerten Abgasturbolader vorgesehenen Schmierölpumpe gelingt es nicht, den Innenradius des rotierenden Ölringes wesentlich kleiner zu machen als den Radius, an welchem sich die Einspritzdüsen 16 befinden. Dies wäre für eine wirksame Einspritzung in die Wellenlager 2 Bedingung, da die Turboladerwelle 1 an der Stelle des Pumpenrotors 7 aus Festigkeitsgründen in der Dicke nicht verkleinert werden kann und der Lagerdurchmesser wegen den vergrösserten Fliehkräften der Reibungsleistung und Materialtemperatur nicht grösser gewählt werden darf.

Gemäss der Erfindung ist nun der Pumpenrotor 7 mit zwei seitlich angeordneten Hohlräumen 8 versehen und zwischen zwei Wellenlager 2 auf der Turboladerwelle 1 befestigt. Die Wellenlager 2 sind jeweils zwischen einer Ölansaugleitung 9 und einem Hohlraum 8 des Pumpenrotors 7 angeordnet. Dadurch wird erreicht, dass das Öl aus dem Ölsumpf 11 durch die Einspritzdüsen 16 und durch die Wellenlager 2 hindurch gesaugt wird.

Darüber hinaus wird zwischen den den Einspritzdüsen 16 zugewandten Stirnflächen des Lageraussenringes 4 und dem Gehäuse 6 ein ringförmiger Ölspalt 14 angeordnet. An den Berührungsflächen zwischen der zylindrischen Aussenoberfläche des Lageraussenringes 4 und dem Gehäuse 6 sowie zwischen der den Einspritzdüsen 16 abgewandten Stirnfläche des Lageraussenringes 4 und dem Gehäuse 6 sind Ölkanäle 17 angeordnet.

Dadurch wird ein freier, beidseitiger Ölablauf aus dem Lager erreicht und die Planschleistung vermindert. Nach innen kann das Öl direkt abfliessen, während es nach aussen mit einem durch die Wälzkörper 5 verursachten Drall in den Ölspalt 14 läuft und durch die Fliehkraftwirkung des dort rotierenden Ölrings durch die Nuten 17 (Kanäle) wieder radial nach innen bis zum Innendurchmesser des Aussenringes 3 gedrückt wird. Das Öl läuft weiter in die Hohlräume 8 des Pumpenrotors 7 und bildet dort rotierende Ölringe 10. Die ganze Ölmenge wird nun durch Abspritzlöcher 15 gefördert und im Ölsumpf 11 gesammelt.

Die auf dem Pumpenrotor 7 angeordneten Abspritzlöcher 15 sind so bemessen und radial nur so weit aussenliegend, dass der innere Radius des rotierenden Ölringes 10 eine kleine Überdeckung von deren innerer Mündung gewährleistet. Damit wird der Vorteil erreicht, dass mit einem minimalen Verlust an Dralleistung verhindert wird, dass die Luft durch die Abspritzlöcher 15 in die unter Unterdruck stehenden Hohlräume 8 dringt.

Der Hohlraum 8 des Pumpenrotors 7, in welchem sich der rotierende Ölring 10 ausbildet, weist eine Tasche 18 auf, die als Schmutzabscheider wirkt. Um im Hohlraum 8 einen konstanten Druck aufrecht zu erhalten, soll die durch die Wellendichtung 19 sowie durch des Öl ständig angebrachte Luft abgeführt werden. Dies erfolgt durch die Saugwirkung der Entlüftungskanäle 12. Um zu verhindern, dass das Schmieröl durch die Entlüftungskanäle 12 des Pumpenrotors 7 austritt, wird die Luft vorerst durch Ölsperrlöcher 13 radial nach innen geleitet, wohin das Öl infolge der Fliehkraftwirkung nicht folgen kann. Diese Ölsperrlöcher 13 befinden sich radial möglichst weit innen.

Für die Ölansaugleitung 9 ist es sehr wichtig, dass keine Drosselstellen entstehen, da in diesem Fall der Ölstrom ungenügend würde.

Die Wirkungsweise einer Zentrifugal-Schmierölpumpe geht aus folgendem hervor:

In den Entlüftungskanälen 12 des Pumpenrotors 7 wird die Luft während des Betriebes durch die Fliehkraftwirkung nach aussen gefördert, wodurch ein Unterdruck in den Hohlräumen 8 entsteht und das Öl aus dem Ölsumpf 11 durch die Ölansaugleitungen 9 und die stillstehende Einspritzdüse 16 durch die Wellenlager 2 hindurch gesaugt wird. Infolge der Wandreibung bildet sich im Hohlraum 8 ein rotierender Ölring 10 aus, dessen Innenradius von Ölzuführung und Ölabspritzung durch die Abspritzlöcher 15 abhängig ist. Im rotierenden Ölring 10 baut sich unter der Fliehkraftwirkung ein Öldruck auf. Eventueller Schmutz im Öl setzt sich an der in Form einer Tasche 18 gestalteten äusseren Innenwand des Hohlraumes 8 ab und wird von Zeit zu Zeit entfernt.

Bei richtig bemessenen Abspritzlöchern 15 stellt sich ein bestimmter Unterdruck im Hohlraum 8 automatisch ein, wenn der innere Ölringdurchmesser um wenige Millimeter geringer ist als der Durchmesser, an welchem sich die Mündungen der Abspritzlöcher 15 befinden. Würde sich der Ölringdurchmesser verkleinern, so steigt der Öldruck an der Mündung in die Abspritzlöcher 15, es wird mehr Öl abgespritzt und der Ölringsdurchmesser steigt wieder, und umgekehrt.

Selbstverständlich ist die Erfindung nicht auf das Dargestellte und das Beschriebene beschränkt. In Abweichung davon könnten die Wellenlager 2 als Doppellager (Tandemlager) ausgeführt werden. Anstatt je eine Reihe am Umfang verteilter Ölsperrlöcher 13 könnten pro Hohlraum zwei oder mehrere Reihen angeordnet werden. Diese Überlegung gilt auch für die Abspritzlöcher 15.

**Patentansprüche**

1. Zentrifugal-Schmierölpumpe eines Abgasturboladers, im wesentlichen bestehend aus einem auf der Turboladerwelle (1) angeordneten, mit Entlüftungskanälen (12) versehenen Pumpenrotor (7), einer Ölansaugleitung (9), die mit ihrem unteren Ende in einen Ölsumpf (11) eintaucht und mit ihrem oberen Ende mit einem Hohlraum (8) verbunden ist, in welchem sich während des Betriebes unter der Fliehkraftwirkung ein rotierender Ölring (10) ausbildet, dadurch gekennzeichnet, dass der Pumpenrotor (7) mit zwei seitlich angeordneten, hydraulisch mit dem Ölsumpf verbundenen Hohlräumen (8) versehen und zwischen zwei Wellenlagern (2) auf der Turboladerwelle (1) befestigt ist, wobei die Wellenlager (2) jeweils zwischen einer Ölansaugleitung (9) und einem Hohlraum (8) des Pumpenrotors (7) angeordnet sind, und wobei das Öl aus dem Ölsumpf (11) durch Einspritzdüsen (16) und durch die Wellenlager (2) hindurch gesaugt wird.

2. Zentrifugal-Schmierölpumpe nach Anspruch 1, dadurch gekennzeichnet, dass zwischen den den Einspritzdüsen (16) zugewandten Stirnflächen der Lageraussenringe (4) und dem Gehäuse (6) ein ringförmiger Ölspalt (14) und an den Berührungsflächen zwischen der zylindrischen Aussenoberfläche der Lageraussenringe (4) und dem Gehäuse (6) sowie den den Einspritzdüsen (16) abgewandten Stirnflächen der Lageraussenringe (4) und dem Gehäuse (6) Ölkanäle (17) angeordnet sind.

3. Zentrifugal-Schmierölpumpe nach Anspruch 1, dadurch gekennzeichnet, dass die hydraulische Verbindung zwischen den Hohlräumen (8) und dem Ölsumpf (11) durch auf dem Pumpenrotor 7 angeordnete Abspritzlöcher (15) erfolgt, die so bemessen sind und radial nur so weit aussen liegen, dass der innere Radius des rotierenden Ölringes (10) eine kleine Überdeckung von deren innerer Mündung gewährleistet.

4. Zentrifugal-Schmierölpumpe nach Anspruch 1, dadurch gekennzeichnet, dass der Hohlraum (8) des Pumpenrotors (7), in welchem sich während des Betriebes der rotierende Ölring (19) ausbildet, eine aussenliegende Tasche (18) aufweist, die als Schmutzabscheider wirkt.

**Claims**

1. Centrifugal lubricating oil pump of an exhaust gas turbo-charger, consisting essentially of a pump rotor (7) provided with de-aeration ducts (12) and located on the turbo-charger shaft (1), an oil induction pipe (9) whose lower end is immersed in an oil sump (11) and whose upper end is connected to a hollow space (8) in which a rotating annulars of oil (10) forms under the influence of the centrifugal force during the operation, characterised in that the pump rotor (7) is provided with two hollow spaces (8) placed at the sides and hydraulically connected to the oil sump and is fastened on the turbo-charger shaft (1) between two shaft bearings (2), each of the shaft bearings (2) being located between an oil suction duct (9) and a hollow space (8) of the pump rotor (7), the oil being sucked from the oil sump (11) through injection nozzles (16) and through the saft bearings (2).

2. Centrifugal lubricating oil pump according to Claim 1, characterised in that an annular oil gap (14) is located between the end surfaces of the bearing outer ring (4) facing towards the injection nozzles (16) and the casing (6) and that oil ducts (17) are located at the contact surfaces between the cylindrical outer surface of the bearing outer rings (47 and the casing (6) and between the end surfaces of the bearing outer rings (4) remote from the injection nozzle (16) and the casing (6).

3. Centrifugal lubricating oil pump according to Claim 1, characterised in that the hydraulic connection between the hollow spaces (8) and the oil sump (11) takes place by means of outlet jet holes (15) on the pump rotor (7), which outlet jet holes are appropriately dimensioned and located just sufficiently far radially outwards so that the inner radius of the rotating annulus of oil (10) ensures a small covering over the inlets to the jet holes.

4. Centrifugal lubricating oil pump according to Claim 1, characterised in that the hollow space (8) of the pump rotor (7), in which the rotating annulus of oil (10) forms during operation, has an external pocket (18) which acts as a dirt separator.

**Revendications**

1. Pompe centrifuge pour l'huile de lubrification d'un turbocompresseur à gaz d'échappement, composée essentiellement d'un rotor de pompe (7) monté sur l'arbre (1) du turbocompresseur et pourvu de canaux de désaération (12), d'une canalisation (9) d'aspiration d'huile qui plonge par son extrémité inférieure dans une réserve d'huile (11) et qui par son extrémité supérieure est raccordée à une chambre (8), dans laquelle il se forme, sous l'effet de la force centrifuge pendant le fonctionnement, un anneau d'huile (10) tournant, caractérisée en ce que le rotor de pompe (7) est pourvu de deux chambres (8) disposées latéralement et se trouvant en communication hydraulique avec la réserve d'huile et qu'il est fixé sur l'arbre (1) du turbocompresseur entre deux paliers (2) de l'arbre, les paliers (2) de l'arbre étant de ce fait disposés chacun entre une canalisation (9) d'aspiration d'huile et une chambre (8) du rotor de pompe (7) et l'huile étant aspirée de la réserve d'huile (11) à travers des injecteurs (16) et à travers les paliers (27 de l'arbre.

2. Pompe centrifuge pour l'huile de lubrification suivant la revendication 1, caractérisée en ce qu'une fente à huile (14) annulaire est ménagée entre le carter (6) et les faces terminales des bagues extérieures (4) des paliers tournées vers les injecteurs (16) et en ce qu'aux surfaces de contact entre la surface cylindrique extérieure des bagues extérieures (4) des paliers et le carter (6) ainsi qu'entre les faces terminales des bagues extérieures (4) des paliers tournées vers les injecteurs (16) et le carter (6), il est prévu des canaux à huile (17).

3. Pompe centrifuge pour l'huile de lubrification suivant la revendication 1, caractérisée en ce que la communication hydraulique entre les chambres (8) et la réserve d'huile (11) est assurée par des trous d'éjection (15) ménagés dans le rotor de pompe (7) et qui sont dimensionnés de telle façon et ne sont positionnés radialement vers l'extérieur qu'à une distance telle que le rayon intérieur de l'anneau d'huile (10) tournant garantit un léger recouvrement de leur embouchure intérieure.

4. Pompe centrifuge pour l'huile de lubrification suivant la revendication 1, caractérisée en ce que la chambre (8) du rotor de pompe (7), dans laquelle l'anneau d'huile (10) tournant se forme pendant le fonctionnement, présente une poche (18) saillante, qui sert de séparateur de crasse.